# EUROPEAN PATENT APPLICATION

(11) **EP 2 044 831 A1**
(43) Date of publication of application: **08.04.2009**
(21) Application number: 07768391.0
(22) Date of filing: 05.07.2007
(51) Int. Cl.: A01G 1/00, A01G 25/06, A01G 27/00

(54) **PLANTING BASE, PLANT-BEARING MASS, PLANTING BASE UNIT, PLANTING SYSTEM AND METHOD OF PLANTING**

(30) Priority: 14.07.2006 JP 2006194851
(71) Applicant: Toyota Jidosha Kabushiki Kaisha, Toyota-shi, Aichi 471-8571 (JP)
(72) Inventor: MATSUI, Kunio, Toyota-shi, Aichi 471-8571 (JP)
(74) Representative: Albutt, Anthony John
(86) International application number: PCT/JP2007/063867
(87) International publication number: WO 2008/007722

(57) **Abstract**

There is provided a planting base, a planting body, a planting system, and a planting method capable of effectively supplying water to the entire region of a greening target area. For that purpose, a planting body 10A is composed of a planting base 1B in which intersected groove lines 11b and 12b are formed on one surface and a water-impermeable layer 2 is formed on the bottom surface of the groove line, and a plant layer 4 which is fixed to a surface on which a groove line of the planting base 1B is formed and has a pre-grown ground cover plant 41. A water supply pipe 5 is buried in the groove line 11b to form a planting system 100.

## Description

### Technical Field

The present invention relates to a planting base and a planting base unit, a planting body made of a plant layer having the planting base as well as a ground cover plant, a planting system made of these as well as a water supply pipe, and a planting method, and particularly to a planting base, a planting base unit, a planting body, a planting system, and a planting method capable of effectively supplying water to the entire region of a greening target area.

### Background Art

Rooftop greening has been one of the recent effective techniques as part of the environmental measures such as a heat island reduction measure, a CO₂ reduction measure, and an energy saving measure. Although this rooftop greening technique can be applied to various kinds of buildings regardless of new or old, the structural safety of a building needs be ensured before a green rooftop is installed thereon. More specifically, the live load used for structural calculation of a building is specified in the article 85 of the Enforcement Order of the Building Standard Law of Japan. For example, 60 kg/m² is specified as the upper limit of the rooftop live load for a condominium and a building requiring the calculation of seismic force.

By the way, one of the essential means for a greening system is a watering means (method). Examples of the conventional watering means include a manual watering method using a water spray hose or the like, a method of using a sprinkler, a method of supplying water to a planting base from a water storage section provided at a bottom portion of the planting base, and further a method of placing (burying) a watering tube for supplying water on the upper surface or inside the planting base.

Of the above described watering means, the manual watering method using a water spray hose or the like has a problem in that watering work requires time and efforts, and if the watering area extends into a wide range, the problem becomes more significant. Moreover, the method of using a sprinkler can solve the problem in that watering work requires time and efforts, but has another problem in that the water sprayed in the air tends to be easily affected by wind, and thus, the water spraying work cannot be performed when wind is strong, or has still another problem in that the water blown by wind extends into neighboring areas.

In addition, the method of using a watering system with a water storage section provided at a bottom portion of the planting base can avoid the above described problems with the influence of wind and water blown by wind, but has a problem in that the greening system is inevitably faced with soaring costs required therefor and has another problem in that an increase in weight of the entire system exceeds the above described load limits. In particular, when a rooftop greening technique is applied to an existing building or the like, the structural design thereof does not consider an added weight therefor from the very beginning, and thus it is naturally often difficult to apply a heavy greening system thereto.

In comparison with the above described means (methods), the method of placing (burying) a watering tube for supplying water on the upper surface or inside the planting base and oozing out water from the watering tube to the planting base is deemed to be the most preferable technique in that the method is not affected (difficult to be affected) by wind, water can be effectively supplied by using an automatic water supply system, an increase in weight can be minimized, and other reasons. For example, Patent Documents 1 and 2 are listed below as the conventional technique related to a watering system using such a watering tube.

The watering system disclosed in Patent Document 1 places two water supply pipes in a water-impermeable sheet, fills a filler therein, laying a non-woven fabric on the upper portion thereof, buries it underground so as to provide water and nutrient as needed based on the underground environment information. On the contrary, the watering system disclosed in Patent Document 2 buries a perforated pipe sandwiched between the upper and lower capillary cloths underground so as to supply water to a plant thereabove through the capillary cloths got wet by the water oozed out from holes of the pipe.
Patent Document 1
   JP Patent Publication (Kokai) No. 7-87857A (1995)
Patent Document 2
   JP Patent Publication (Kohyo) No. 10-504192A (1998)

### Disclosure of the Invention

Both systems disclosed in the above mentioned Patent Documents 1 and 2 can exert the above effects by applying a watering tube thereto. However, the water oozing out from a linear watering tube can be sufficiently supplied in the vicinity of the watering tube, but the further away from the watering tube, less water is supplied. In particular, if the supply area is wide, it is very questionable to effectively supply water to the entire region thereof. For example, since the system disclosed in Patent Document 2 supplies water through a capillary cloth, it is apparent that there is a limit in capillary action of the cloth.

In view of the above described problems, the present invention has been made, and an object of the present invention is to provide a planting base, a planting base unit, a planting body, a planting system, and a planting method capable of effectively supplying water to the entire region of planting base.

In order to achieve the above object, the planting base of the present invention is a planting base for growing a ground cover plant on an upper surface thereof, **characterized in that** the planting base has a groove line formed on a surface in which a plant is grown; and a water-impermeable layer is formed on a bottom surface of the groove line. Alternatively, the embodiment may be such that a low water-permeable layer which is relatively lower water-permeable than a planting base material is formed at least on the bottom surface of the groove line.

Examples of the planting base include one which is formed, for example, by laminating fabrics made of synthetic fibers such as acrylic fibers into a multilayer and pressing it; and one which is formed by connecting and curing a resin foam and soil particles with an appropriate binder. Examples of the planting base shape include one which is formed into a block having a size of several tens cm square; and one which is formed into a sheet shape having a relatively wide area. The planting base is formed as a product having a predetermined hardness (rigidity) so as to be able to form a groove line on one surface thereof as described later. Further, the planting base may have a drainage layer (a resin product having a drainage groove or a fiber sheet having a high water-permeability) thereunder for draining supply water oozed downward the planting base.

Moreover, the ground cover plant to be used is not limited to this, but examples thereof may include the turfgrass (Japanese lawn grass, Western lawn grass, clover, and the like), the low tree (azalea, Pachysandra terminalis, and the like), the vine (Hedera, honeysuckle, and the like), the shrubby bamboo, the herbage (Ajuga, Ophiopogon japonicus, and the like), the fern (Selaginella tamariscina and the like).

A groove line having an arbitrary sectional shape (such as a rectangular shape, a U shape and a V shape) is formed on an upper surface of the ground cover plant side of the planting base. A water-impermeable layer or a low water-permeable layer which is relatively lower water-permeable than the planting base material constituting the planting base is formed on a bottom surface of the groove line. The groove line is used to provide the water supplied from a water supply pipe such as a drip tube installed immediately above or upward thereof to the entire region of the planting base. Forming a water-impermeable layer or a relatively low water-permeable layer on the bottom surface of the groove line can prevent the water from oozing out by its own weight downward the groove line but allows the water to ooze out from the side surface of the groove line in the side direction thereof. It should be noted that if a low water-permeable layer is formed in the groove line, the low water-permeable layer can be formed on not only the bottom surface of the groove line but also the side surface thereof. This is because water can be oozed out from the side surface of the groove line through the low water-permeable layer.

The above described water-impermeable layer can be made of, for example, an adhesive tape, a polyethylene sheet, or the like generally available on the market. Moreover, the low water-permeable layer is determined by the relationship to the planting base material (permeability coefficient thereof). For example, when the planting base is made by pressing a synthetic fiber or the like, the low water-permeable layer (a layer having a relatively low permeability coefficient) can be formed on an internal surface of the groove line by applying a varying pressure thereto depending on the general portion and the groove line portion when pressed (applying a higher pressure to the groove line when pressed). Apparently, an appropriate low water-permeable material may be adhered thereto or placed therein.

According to the planting base of the present invention, water can be effectively supplied to the entire region of the planting base by a simple configuration achieved simply by forming a groove line and forming a water-impermeable layer or a low water-permeable layer on the bottom surface thereof. For example, simply installing a water supply pipe above one groove line allows the supply water to ooze out in the side direction through the groove line. An area not yet supplied with water can be surely prevented from occurring by increasing the number of groove lines according to the area of the planting base and installing a water supply pipe above the individual groove line.

Moreover, a preferred embodiment of the planting base in accordance with the present invention is **characterized in that** two or more of the groove lines described above are intersected.

The present embodiment is an embodiment for effectively supplying water to the entire region of the planting base using as small number of water supply pipes as possible, including an embodiment of forming another groove line orthogonal to an arbitrary groove line, an embodiment of placing a plurality of the orthogonal groove lines at a predetermined interval, or an embodiment of forming groove lines intersected along the diagonal lines of a planting base having the shape of a rectangle in plan view.

In the same way as in the above described embodiments, a water-impermeable layer is formed on the bottom surface of each of the intersected groove lines or a low water-permeable layer is formed at least on the bottom surface of the individual groove lines.

According to the planting base of the present invention, water can be effectively supplied to the entire region of the planting base using as small number of water supply pipes as possible by supplying water supplied from the water supply pipe installed above an arbitrary groove line to a downward groove line, through which water is supplied to another intersected groove line and then water oozes out from the side surface of the individual groove lines into the planting base.

When a plurality of the planting bases is placed side by side, it is preferable to form a planting base unit of an embodiment in which the corresponding groove lines are connected to each other. The use of such a unit can provide a wide range of watering by supplying water to a wide range through the connected groove lines.

Moreover, the planting body in accordance with the present invention is characterized by including the planting base and a plant layer which is fixedly installed on a surface in which a groove line of the planting base is formed and a pre-grown ground cover plant is placed.

The plant layer is composed of the above described ground cover plant and a soil layer (for example, made from minerals such as perlite) so as to allow the roots to extend thereinto. The plant layer is fixedly installed on one surface (a surface of the side in which the groove line is formed) of the above described planting base to form the planting body. A planting area can be formed simply by installing the planting body in the target area.

A notch along a groove line can also be preliminarily formed in the planting body at a position corresponding to the groove line of the planting base. The planting body is installed in the target area, and then, the plant layer is opened (lifted) through the notch to expose the groove line. A water supply pipe is buried in the groove line and then the plant layer is returned to the original position to complete the work. It should be noted that when a plurality of groove lines are formed, the notch may be formed only on the groove line intended to install the water supply pipe therein.

In addition, the planting system of the present invention can be composed of the above described planting base and the water supply pipe or the planting body and the water supply pipe. It should be noted that supplying water to the water supply pipe is performed by a control device for supplying a predetermined amount of water to the planting base based on the ambient temperature, time, and the like, and the planting system is configured by including a water distribution pipe connecting the water supply pipe and the water source (tap water main pipe, and the like), and open/close control valves which are installed in appropriate positions of a water distribution pipe and a water supply pipe.

Moreover, the planting method in accordance with the present invention is characterized by including a first step of providing a planting base in which a groove line is formed on a surface in which a plant is grown and a water-impermeable layer or a low water-permeable layer is formed on a bottom surface of the groove line, and a planting body having a pre-grown ground cover plant; placing a plurality of planting bases side by side in a target area; and installing the planting body on an upper surface of the planting base; and a second step of installing a water supply pipe on an upper surface of a planting body located above the groove line.

Examples of the target area to which the planting method is applied include a rooftop and a balcony of a building such as a condominium, and a detached house, as well as an area of an open space where asphalt or concrete is normally exposed (e.g., a parking lot) but greening is temporarily required to hold an event. According to the planting method of the present invention, the target area can be greened in an extremely short time and a simple manner, and thus, an effective planting construction can be achieved without requiring a special technique for construction.

Moreover, another embodiment of the planting method in accordance with the present invention is characterized by including a first step of providing a planting body including a planting base in which a groove line is formed on a surface in which a plant is grown and a water-impermeable layer or a low water-permeable layer is formed on a bottom surface of the groove line, and a plant layer which is fixedly installed on a surface in which a groove line of the planting base is formed and a pre-grown ground cover plant is placed; and placing a plurality of planting bodies side by side in a target area; and a second step of installing a water supply pipe on an upper surface of a plant layer located above the groove line.

Further, yet another embodiment of the planting method in accordance with the present invention is characterized by including a first step of providing a planting body including a planting base in which a groove line is formed on a surface in which a plant is grown and a water-impermeable layer or a low water-permeable layer is formed on a bottom surface of the groove line, and a plant layer which is fixedly installed on a surface in which a groove line of said planting base is formed and a pre-grown ground cover plant is placed, a notch along a groove line being formed in said plant layer at a position corresponding to the groove line; and placing a plurality of the planting bodies side by side in a target area; and a second step of installing a water supply pipe in the planting body through the notch of the plant layer.

It should be noted that the notch provided in the plant layer may be formed after a plurality of the planting bodies are installed in the target area.

As understood from the above description, according to the planting base, the planting base unit, the planting body, planting system, and planting method of the present invention, water can be supplied to the entire region of the area to be watered in a short time and an effective manner by an extremely simple configuration of the planting base including a groove line, and a water-impermeable layer or a low water-permeable layer provided on the bottom surface thereof. Such a simple configuration eliminates a problem with increased manufacturing costs thereof.

### Brief Description of the Drawings

Figure 1 is a drawing illustrating an embodiment of a planting base of the present invention, in which (a) is a plan view and (b) is a sectional view.
Figure 2 (a) and (b) are enlarged views of the II portion of Figure 1b.
Figure 3 is a plan view illustrating another embodiment of the planting base of the present invention.
Figure 4 is a plan view illustrating yet another embodiment of the planting base of the present invention.
Figure 5 is a plan view illustrating still another embodiment of the planting base of the present invention.
Figure 6 is a plan view illustrating still yet another embodiment of the planting base of the present invention.
Figure 7 is a drawing illustrating an embodiment of a planting body of the present invention, in which (a) is a plan view and (b) is a sectional view.
Figure 8 is a drawing illustrating an embodiment of a planting system of the present invention, in which (a) is a plan view and (b) is a sectional view.
Figure 9 is a drawing explaining a planting method.
Figure 10 is a drawing explaining the planting method following Figure 9.
Figure 11 is a drawing explaining the planting method following Figure 10.
Figure 12 is a drawing explaining an experimental outline, in which (a) is a plan view and (b) is a sectional view.
Figure 13 is a plan view schematically illustrating an experimental result.

In the Figures, reference numeral 1 denotes a planting base; reference numerals 11 and 12 denote groove lines; reference numeral 2 denotes a water-impermeable layer; reference numeral 3 denotes a low water-permeable layer; reference numeral 4 denotes a plant layer; reference numeral 41 denotes a ground cover plant; reference numeral 42 denotes a soil; reference numeral 43 denotes a notch; reference numeral 5 denotes a water supply pipe; reference numeral 6 denotes a drainage layer; reference characters 10 and 10A denote planting bodies; reference numeral 100 denotes a planting system; reference character M1 denotes a comparative example model; and reference character M2 denotes an embodiment example model respectively.

### Best Mode for Carrying Out the Invention

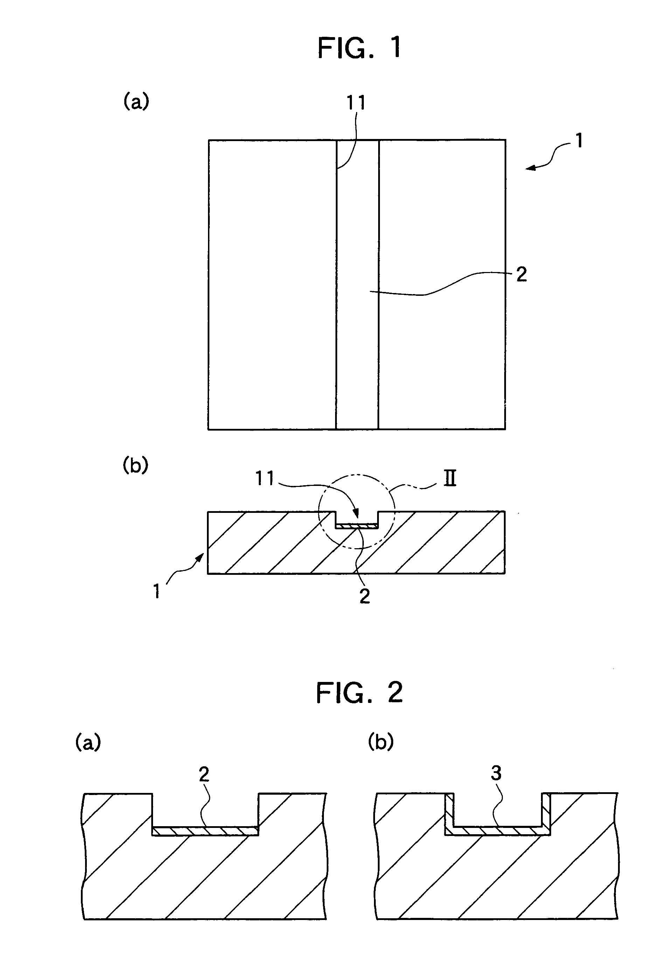

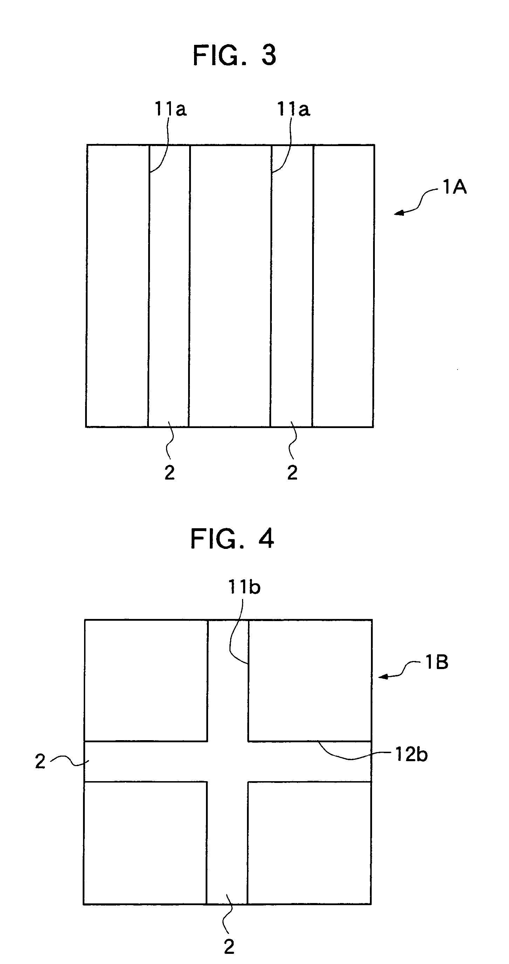

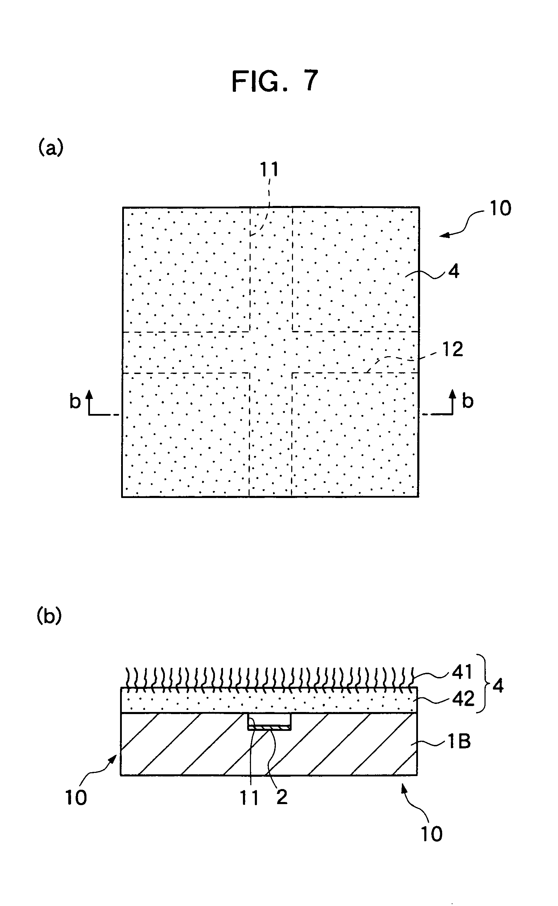

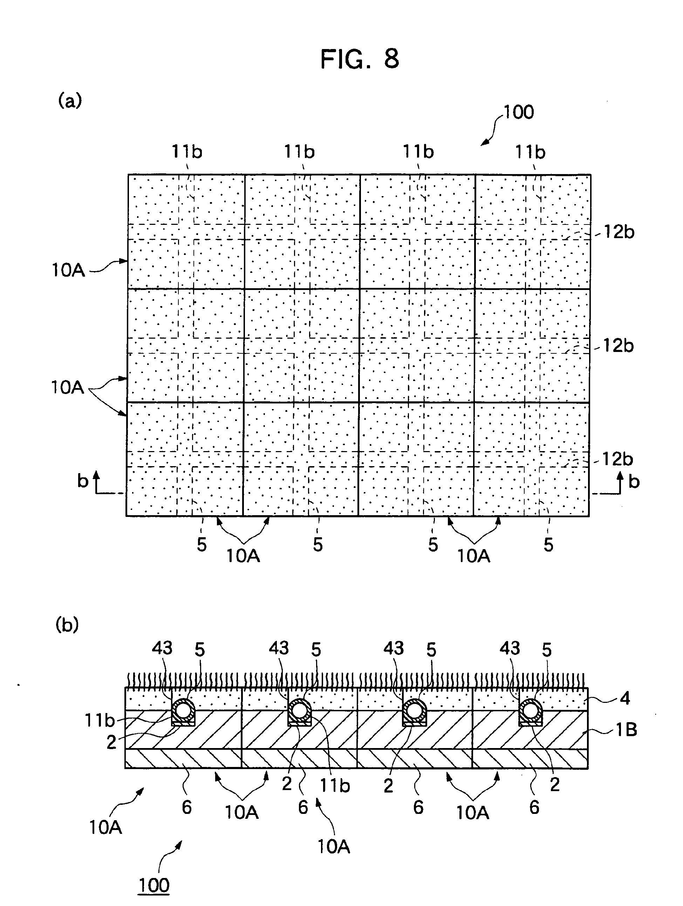

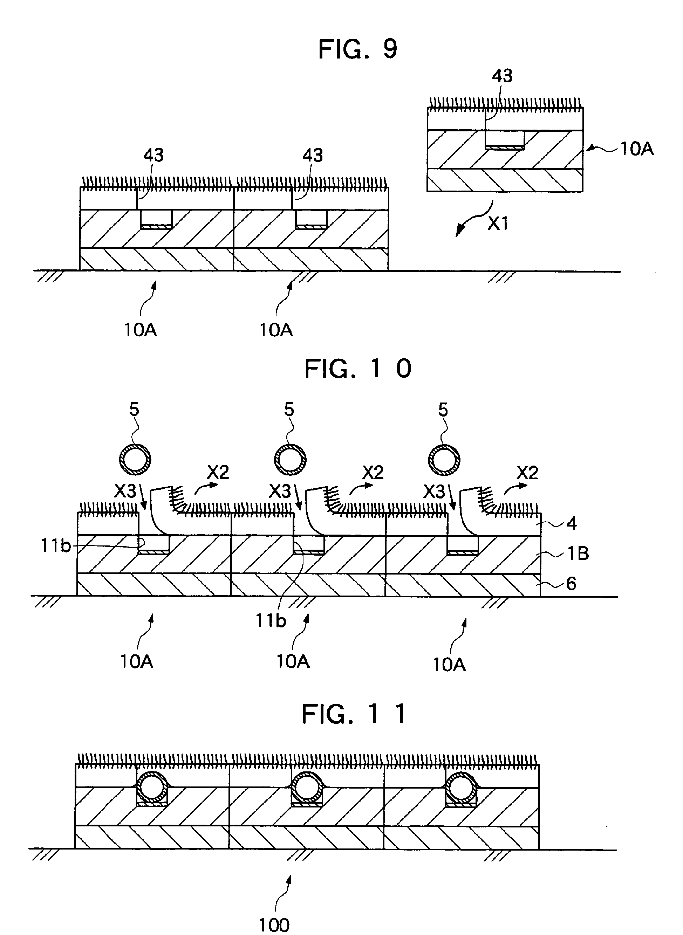

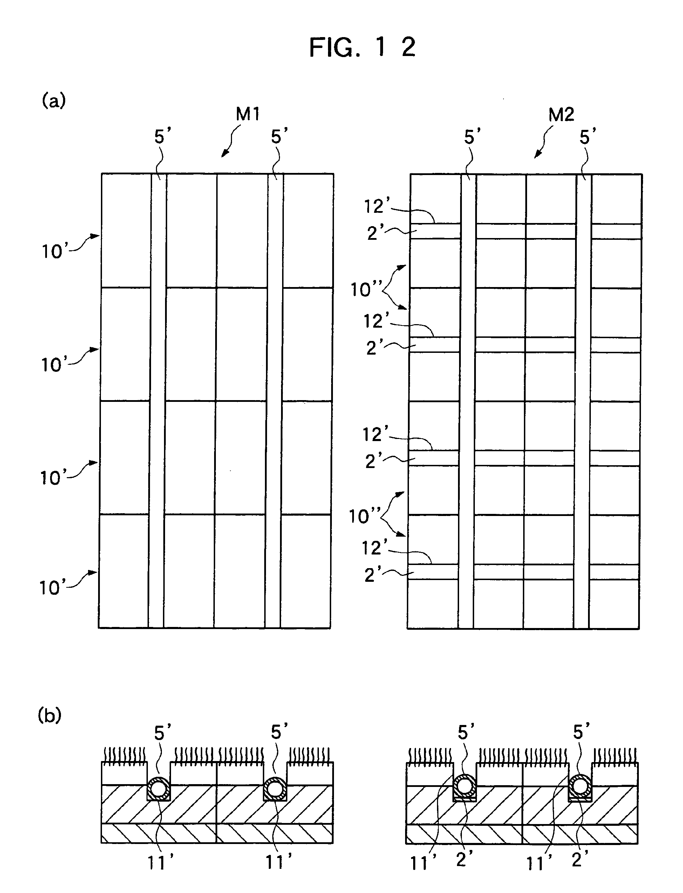

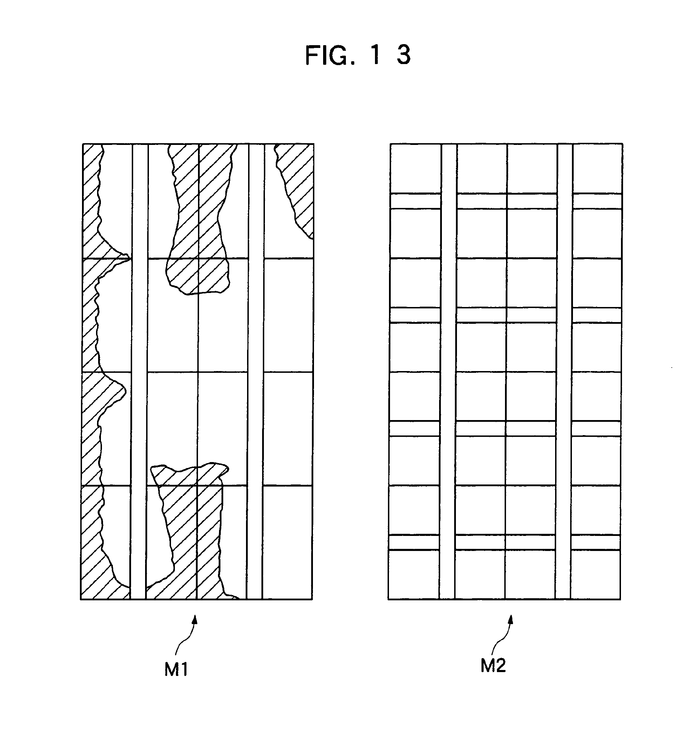

Hereinafter, embodiments of the present invention will be described with reference to drawings. Figure 1 is a drawing illustrating an embodiment of a planting base of the present invention, in which 1a is a plan view and 1b is a sectional view. Figures 2a and 2b are enlarged views of the II portion of Figure 1b. Figures 3 to 6 are plan views, each illustrating another embodiment of the planting base of the present invention. Figure 7 is a drawing illustrating an embodiment of a planting body of the present invention, in which 7a is a plan view and 7b is a sectional view. Figure 8 is a drawing illustrating an embodiment of a planting system of the present invention, in which 8a is a plan view and 8b is a sectional view. Figures 9 to 11 are drawings, each sequentially explaining a planting method. Figure 12 is a drawing explaining an experimental outline, in which 12a is a plan view and 12b is a sectional view. Figure 13 is a plan view schematically illustrating an experimental result. It should be noted that the planting system illustrated in the Figures does not include the constituent members (e.g., a water source (tap water main pipe), a water distribution pipe connecting the main pipe and a water supply pipe, an open/close control valve, a control device for adjusting and controlling a water distribution amount, a water distribution time, a water distribution timing, and etc) other than the constituent members representing the characteristics of the present invention.

Figure 1a is a plan view illustrating an embodiment of the planting base. The planting base 1 is square (or rectangular) in plan view and is formed into a desired size (e.g., 50 cm x 50 cm x 3 cm (thickness)). A greening target area can be easily greened by arranging a plurality of planting bases 1 in the entire greening target area. The planting base 1 is formed, for example, by laminating fabrics made of synthetic fibers such as acrylic fibers into a multilayer and pressing it. As shown in Figure 1b, one groove line 11 having a rectangular shape in sectional view is formed on one surface thereof It should be noted that the groove line may be of any sectional shape such as a U shape and a V shape. If the planting base 1 is formed into the above mentioned size (50 cm × 50 cm × 3 cm (thickness)), the groove line can be 10 to 50 mm wide and about 5 mm deep. Moreover, a drainage layer (drainage block), for example, made of plastic may be adhered to the bottom surface of the planting base 1.

The water-impermeable layer 2 made of, for example, an adhesive tape, a polyethylene sheet, or the like available on the market is formed on the bottom surface of the groove line 11. As described later, the water-impermeable layer 2 prevents the water supplied from the water supply pipe above the groove line 11 from oozing out downward the groove line but allows the water to ooze out from a side surface of the groove line into the planting base material, and thus enables a wide range of watering.

Figure 2 is an enlarged view of the groove line in Figure 1. Figure 2a is an embodiment of attaching or placing the water-impermeable layer 2 only on the bottom surface of the groove line 11, and Figure 2b is an embodiment of adhering the low water-permeable layer 3 which is relatively lower water-permeable than the planting base material to the entire surface of the groove line 11. The low water-permeable layer allows water to ooze out from the side surface of the groove line 11 into the planting base and thus can cover the entire surface of the groove line. Apparently, the low water-permeable layer may be attached only to the bottom surface of the groove line 11.

Figures 3 to 6 are plan views, each illustrating another embodiment of the planting base respectively. More specifically, each embodiment of the groove line formed on one surface is changed.

Figure 3 illustrates a planting base 1A, on which two groove lines 11 a and 11a are formed at a predetermined interval, and water-impermeable layers 2 and 2 are formed on the bottom surface of each groove line. This embodiment is preferable to a relatively wider planting base and can support a wide water supply area by installing a water supply pipe (not shown) above each groove line. It should be noted that three or more groove lines may be formed depending on the area and the quality (water permeability) of the material of the planting base.

Figure 4 illustrates an embodiment of a planting base 1B, in which two groove lines 11b and 12b are mutually orthogonal. This planting base only needs a water supply pipe (not shown) to be installed, for example, above the groove line 11b (a water supply pipe does not need to be installed at the groove line 12b). This embodiment allows the water supplied to the groove line 11b to flow down into the intersecting groove line 12b and then the water can ooze out from the side surface of the groove line 12b into the planting base. Accordingly, water can be supplied to a wide water supply area with as small number of water supply pipes as possible.

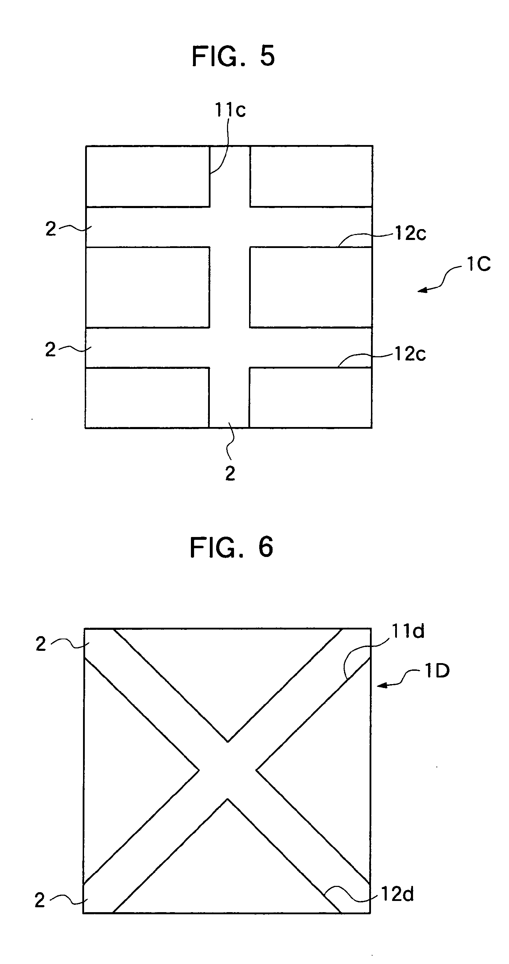

Figure 5 illustrates an embodiment of a planting base 1C, in which two groove lines 12c and 12c are spaced orthogonally to the groove line 11c respectively. This embodiment is preferable to a planting base which is long along the longitudinal direction of the groove line 11c.

Figure 6 illustrates an embodiment of a planting base 1D, in which two groove lines 11d and 12d are provided along the diagonal line of the rectangle respectively.

As described hereinbefore, the planting base of the present invention is formed into a shape in which one groove line or two or more groove lines are mutually intersected, and a water-impermeable layer or the like is formed on the bottom surface of an individual groove line. Therefore, the water supplied to a groove line can effectively ooze out over the entire region of the planting base without oozing out downward the groove line.

Figure 7 is a drawing illustrating a planting body 10, which is formed on the surface in which groove lines of the planting base 1B are formed as illustrated in Figure 4 and to which the plant layer 4 made of the ground cover plant 41 and the soil 42 is adhered. Figure 7a is a plan view, and Figure 7b is a sectional view as viewed from arrows b-b of Figure 7a. Examples of the ground cover plant may include the turfgrass (Japanese lawn grass, Western lawn grass, clover, and the like), the low tree (azalea, Pachysandra terminalis, and the like), the vine (Hedera, honeysuckle, and the like), the shrubby bamboo, the herbage (Ajuga, Ophiopogon japonicus, and the like), the fern (Selaginella tamariscina and the like).

Greening can be achieved in an extremely short time simply by carrying and installing the planting body 10 having pre-grown ground cover plants in a greening target area. It should be noted that a drainage layer (drainage block) may be adhered to the bottom surface of the planting base 1 constituting the planting body 10.

Figure 8 is a drawing illustrating the planting system 100 which is formed by placing a plurality of planting bodies 10 side by side as illustrated in Figure 7, and in which a water supply pipe 5 such as a drip tube is buried in the groove line 11b under the plant layer 4. Figure 8a is a plan view and Figure 8b is a sectional view as viewed from arrows b-b of Figure 8a.

The planting body 10A constituting the planting system 100 is composed of the planting base 1B, the drainage layer 6 thereunder, and the plant layer 4 above the planting base 1B. The notch 43 is preliminarily formed in the plant layer 4 along the groove line 11b above the groove line 11b. After the planting body 10A is installed, the water supply pipe 5 is installed in the groove line 11b by lifting the plant layer 4 through the notch 43. When the plant layer 4 is restored to the original position, the planting system 100 can be formed with the water supply pipe 5 buried therein. It should be noted that the notch 43 may be formed using a cutter or the like after the planting body 10A is installed.

Figures 9 to 11 are drawings schematically explaining a method of forming the planting system 100 (the planting method of the present invention).

First, a desired number of planting bodies 10A, 10A, ... are carried and placed sequentially side by side in a greening target area as shown in Figure 9 (in the X1 direction).

Next, the plant layer 4 is lifted through the notch 43 (in the X2 direction), and then, the water supply pipe 5 is placed in the groove line 11b (in the X3 direction).

The lifted plant layer 4 is restored to the original position. Then, for example, a worker tramples thereon by foot or the like to flatten the surface thereof, and then, the installation of the water supply pipe 5 is completed.

The planting bodies 10A, ... are installed, the water source and the water supply pipe 5, ... are connected by a water distribution pipe or the like, and a control device for performing the open/close control of an open/close control valve provided in an arbitrary position of the pipe is installed in a predetermined position. Then, the installation of the planting system 100 is completed and the greening work in the greening target area is completed.

### [Demonstration experiment]

Hereinafter, with reference to Figures 12 and 13, the outline of the demonstration experiment and the result thereof conducted by the present inventors will be described. This demonstration experiment verified the presence or absence of a plant death depending on the conventional watering method using a drip tube and the watering method using the planting base of the present invention.

Figure 12a illustrates a comparative example model M1 made of a conventional planting body 10' and an embodiment example model M2 made of the planting body 10" of the present invention. M1 and M2 are installed in an experimental section, the drip tube 5' is installed therein, and water is supplied from the drip tube 5' having a watering opening provided at 30 cm intervals. It should be noted that in the model M2, the groove lines 11' and 12' orthogonal to one planting body 10"are formed and the water-impermeable layer 2' made of an adhesive tape is adhered to each groove line.

The experiment was conducted by observing a plant death condition one month and two months later.

Figure 13 is a drawing schematically illustrating a plant death condition for each model two months later.

First, according to an observation one month later, in the model M1, plant deaths were confirmed at a position far away from the drip tube 5' and the plant death region accounted for about as much as 30% of the entire area. On the contrary, no plant death was confirmed in the model M2.

Next, according to an observation two months later, in the model M1, the plant death rate was increased and the plant death region accounted for about 40% of the entire area (shaded region in the M1 of Figure 13).

On the contrary, no plant death was confirmed in the model M2, and the plants were grown satisfactorily.

The above experimental results revealed that watering effect on the greening target area was increased in the model M2 even if the same number of drip tubes of the same kind was used. It can be concluded that this was because the water supplied from the drip tube was sufficiently supplied to the entire region of the planting area since groove lines 11' and 12' are intersected and the water-impermeable layer 2' was formed on the bottom surface of each groove line.

The embodiments of the present invention are described in detail with reference to drawings hereinbefore, but specific configurations are not limited to these embodiments. It is to be understood that any design changes and the like made without departing from the spirit and scope of the invention are included in the present invention.

## Claims

1. A planting base for growing a ground cover plant on an upper surface thereof,
**characterized in that:**
said planting base has a groove line formed on a surface in which a plant is grown; and
a water-impermeable layer is formed on a bottom surface of said groove line.

2. A planting base for growing a ground cover plant on an upper surface thereof,
**characterized in that:**
said planting base has a groove line formed on a surface in which a plant is grown; and
a low water-permeable layer which is relatively lower water-permeable than a planting base material is formed at least on a bottom surface of said groove line.

3. The planting base according to claim 1 or 2, **characterized in that** two or more of said groove lines are intersected.

4. A planting base unit **characterized in that** planting bases according to any one of claims 1 to 3 are placed side by side and said individual groove lines are connected to each other.

5. A planting body **characterized by** comprising:
a planting base according to any one of claims 1 to 3; and
a plant layer which is fixedly installed on a surface in which a groove line of said planting base is formed, and a pre-grown ground cover plant is placed.

6. The planting body according to claim 5, **characterized in that** said plant layer has a notch along a groove line being formed at a position corresponding to said groove line.

7. A planting system **characterized by** comprising at least:
a planting base according to any one of claims 1 to 3; and
a water supply pipe provided above the bottom surface of said groove line.

8. A planting system **characterized by** comprising at least:
a planting body according to claim 5 or 6; and
a water supply pipe provided immediately above the bottom surface of said groove line or immediately above said plant layer.

9. A planting method **characterized by** comprising:
a first step of providing a planting base in which a groove line is formed on a surface in which a plant is grown and a water-impermeable layer or a low water-permeable layer is formed on a bottom surface of said groove line, and a planting body having a pre-grown ground cover plant; placing a plurality of planting bases side by side in a target area; and installing the planting body on an upper surface of said planting base; and
a second step of installing a water supply pipe on an upper surface of a planting body located above said groove line.

10. A planting method **characterized by** comprising:
a first step of providing a planting body comprising a planting base in which a groove line is formed on a surface in which a plant is grown and a water-impermeable layer or a low water-permeable layer is formed on a bottom surface of said groove line, and a plant layer which is fixedly installed on a surface in which a groove line of said planting base is formed and a pre-grown ground cover plant is placed; and placing a plurality of said planting bodies side by side in a target area; and
a second step of installing a water supply pipe on an upper surface of a plant layer located above said groove line.

11. A planting method **characterized by** comprising:
a first step of providing a planting body comprising a planting base in which a groove line is formed on a surface in which a plant is grown and a water-impermeable layer or a low water-permeable layer is formed on a bottom surface of said groove line, and a plant layer which is fixedly installed on a surface in which a groove line of said planting base is formed and a pre-grown ground cover plant is placed, a notch along a groove line being formed in said plant layer at a position corresponding to said groove line; and placing a plurality of said planting bodies side by side in a target area; and
a second step of installing a water supply pipe in the planting body through said notch of the plant layer.

12. A planting method **characterized by** comprising:
a first step of providing a planting body comprising a planting base in which a groove line is formed on a surface in which a plant is grown and a water-impermeable layer or a low water-permeable layer is formed on a bottom surface of said groove line, and a plant layer which is fixedly installed on a surface in which a groove line of said planting base is formed and a pre-grown ground cover plant is placed; and placing a plurality of said planting bodies side by side in a target area;
a second step of forming a notch along a groove line in said plant layer at a position corresponding to said groove line; and
a third step of installing a water supply pipe in a planting body through said notch of the plant layer.

13. The planting method according to any one of claims 9 to 12, **characterized in that** two or more of said mutually intersected groove lines are formed on said planting base.
